# EUROPEAN PATENT APPLICATION

(11) **EP 1 359 132 A1**
(43) Date of publication of application: **05.11.2003**
(21) Application number: 02291081.4
(22) Date of filing: 30.04.2002
(51) Int. Cl.: C04B 35/80, F28F 21/04, F16D 69/02, F16J 15/34, C04B 35/83, C04B 35/571, C04B 35/589, C04B 35/524

(54) **Composites, applications, and process for manufacturing said composites**

(71) Applicant: EUROPEAN COMMUNITY, 1049 Brussels (BE)
(72) Inventor: Veyret, Jean-Bernard, 1862 EZ Bergen (NL); Rak, Zbigniew, 1827 PH Alkmaar (NL)
(74) Representative: Le Roux, Martine

(57) **Abstract**

The present invention relates to:
- 2D-long fiber reinforced ceramic matrix composites, particularly suitable for brake lining applications. The long fibers of said composites are selected from the group consisting of carbon fibers, non-oxide ceramic fibers and mixtures thereof while ceramic matrix is a biphasic ceramic-amorphous matrix;
- manufactured articles, consisting at least in part of at least one of said composites;
- a mixed process for manufacturing said composites.

## Description

The present invention relates to:
- new composites, particularly suitable for brake lining applications,
- manufactured articles, consisting at least in part of at least one of said new composites,
- a new process for manufacturing such new composites.

The composites of the invention are original 2D-long fiber reinforced ceramic matrix composites. Their structure includes specific long fibers in a specific bi-phasic matrix. The said composites are as efficient as prior art composites in specific applications. They are more particularly interesting because of their lower manufacturing cost.

The manufacturing process of said composites is actually particularly interesting.

Among the various approaches in the development of ceramic matrix composites (CMCs), suitable for making friction discs, chemical vapor infiltration (CVI) has been successfully carried out to produce carbon/carbon (C/C) composites. However, such a process has high producing cost and long manufacturing time (above 1 000 hours).

The other processes, competitive to the CVI process, have also drawbacks. Liquid polymer infiltration (LPI) requires multiinfiltration repeating procedure ranging from 150 to 250 hours, which has also a significant influence on the manufacturing cost. Liquid silicon infiltration (LSI) is an alternative process which greatly reduces the cost, but which still has a long manufacturing time (approx. 40 hours) and which requires use of quite expensive equipment and high temperature treatment procedure.

For lower manufacturing costs (shorter manufacturing time (2 to 3 days) + lower thermal treatment (1000 - 1300°C)), the present invention proposes new materials which offer comparable friction behavior to existing materials. The cost can be decreased by 50% compared to the one of chemical vapor infiltration (CVI), and by 25-30% compared to the one of liquid silicon infiltration (LSI).

The new composites of the invention are 2D-long fiber reinforced ceramic matrix composites. Characteristically:
- the said long fibers are selected from the group consisting of carbon fibers, non-oxide ceramic fibers, and mixtures thereof; and
- the said ceramic matrix is a biphasic ceramic-amorphous matrix.

The said long fibers are advantageously carbon fibers or non-oxide ceramic fibers such as SiC or Si₃N₄ fibers. Carbon fibers are particularly preferred in view of their low cost.

The said ceramic matrix is characteristically a biphasic crystalline one. It includes both a ceramic phase and an amorphous or glassy phase.

Many combinations may exist.

The crystalline phase ceramic component of the said matrix may consist of Cgraphite, of another non-oxide compound or of one of their mixtures. Suitable non-oxide compounds are SiC, Si₃N₄, SiAION, MoSi₂. Said list is in no way exhaustive.

The amorphous (glassy) phase component of the said matrix may consist of an amorphous carbon phase (Cₐₘ), an amorphous SiCN phase, an amorphous SiCNB phase, or of a mixture of such amorphous phases.

These two different components of the said matrix - the ceramic one and the amorphous (glassy) one - are obtainable from suitable precursors at the end of a particularly interesting manufacturing process (see below).

The 2D-long fiber reinforced ceramic matrix composites of the invention may be used as such, as 2D-composites, or more generally, stacked, as "3D-composites". Such "3D-composites", obtained from a 2D-preform, show anisotropic properties.

Generally speaking, all manufactured articles, consisting of at least one composite of the invention (as described above) is part of the presently claimed invention.

Such manufactured articles may consist of brake lining, seals, components of chemical reactors, heat recover equipment, heat exchanges, heat pumps and Stirling engines.

The composites of the invention are particularly suitable for brake applications in the aircraft and automotive sectors.

The process for manufacturing the composites of the invention constitutes the third object of the presently claimed invention. Characteristically, the said process is a mixed one. It mainly includes a ceramic powder(s) infiltration followed by a resin infiltration.

More precisely, the said process comprises:
- impregnating a 2D-long fiber preform with a solvent dispersion of a ceramic powder; said fibers of the preform being selected from the group consisting of carbon fibers, non-oxide ceramic fibers and mixtures thereof,
- removing said solvent from the impregnated preform to obtain a green body,
- impregnating said green body with a precursor of an amorphous matrix,
- heat treating said impregnated green body to generate the composite sought after or to generate a precursor of it which must undergo at least one further cycle of impregnation with a precursor of the amorphous matrix and heat treatment.

The first step of the claimed process is a step of impregnation of a suitable fibers-preform with a solvent (generally an aqueous) ceramic dispersion (a slurry).

To achieve the required composite, the fibers are carbon fibers, non-oxide ceramic fibers (such as SiC or Si₃N₄ fibers) or mixtures thereof. The fibers are advantageously carbon fibers, as indicated above.

The solvent ceramic dispersion (slurry) used contains at least one ceramic powder. Said at least one ceramic powder is advantageously selected from the group consisting in Cgraphite powder, in another non-oxide powder (such as SiC, Si₃N₄, SiAION, MoSi₂ ...), and in a mixture of said powders. Any suitable prior art ceramic powder may actually be used in this first infiltration step of the process of the invention. It may be used alone or in a mixture.

The amount of said at least one ceramic powder in said solvent dispersion is generally from 20 to 85% weight, advantageously from 50 to 70% weight.

As in the prior art, the said solvent dispersion or slurry may also advantageously contain at least one additive, for example to obtain optimal viscosity and wetting conditions so as to allow full infiltration to the 2D-fiber preforms.

Actually, the slurry used is generally a slurry of 20 to 85% weight solid content containing a dispersant, preferably up to 0.2% weight of solid weight, and a wetting agent, preferably up to 2.0% weight of liquid weight.

After removal of the solvent (carried out by drying, said drying being optionally gas-pressure assisted), the product obtained - impregnated fiber preforms, called a green body - contains uniformly distributed fibers within ceramic powders.

The porosity of the matrix of said green body is advantageously comprised between 20 and 50% volume. Very interesting results have been obtained with green bodies showing a porosity of 40% volume.

The resulting pore size distribution is generally in the range of 10 to 30 µm.

The green body obtained is then characteristically submitted to a single infiltration/heat treatment cycle or to successive such infiltration/heat treatment cycles.

The porosity of the said green body has to be filled up with a precursor of an amorphous matrix, which is heat-treated to generate the said expected amorphous matrix.

We know that the said expected amorphous matrix may consist of an amorphous carbon one, an amorphous SiCN one, an amorphous SiCNB one or of a mixture of such amorphous matrices. Suitable precursors are selected from the group consisting of organic polymer resins and their mixtures. Suitable precursors may in a particularly preferred manner be selected from phenolic resins, polysiloxanes (such as polycarbosiloxanes), and polysilazanes (such as polyureasilazanes).

Such precursors are commercially available.

The precursor of an amorphous matrix (of the amorphous phase of the aimed bi-phasic matrix) used has to be liquid with a suitable viscosity, so as to allow infiltration between the fibers and the ceramic powders of the green body. Advantageously, the said precursor has a viscosity of between 0,5 and 5 P (5 and 50 cPa.s).

The successfully impregnated fibers-preform may then be heat-treated to generate the expected composite or a precursor of it. The heat-treatment is effective to convert the precursor used of an amorphous matrix to the amorphous component of the bi-phasic matrix sought after. The phenolic resin used is so converted into amorphous carbon, for example.

The heat-treatment conditions (temperature cycles, atmospheres) obviously depend upon the exact nature of the precursor used and are per se well known to the person skilled in the art.

Advantageously, the heat-treatment of the impregnated green body is carried out in two successive steps. The said impregnated green body is first heat-treated at a temperature, which obviously depends on the kind of precursor used, typically between 80 and 300°C. As a result, the said impregnated green body thermosets to a rigid solid. It is then easier to manipulate the said product and particularly easy to machine it.

Advantageously, the heat-treated green body is then shaped or machined before final heat-treatment.

The said final heat-treatment generally consists in a pyrolysis step, carried out in a non-oxidizing atmosphere (N₂, or a reducing gas...).

Surprisingly it has been possible, according to the invention, to obtain a very dense 2D-composite material with a single infiltration/heat-treatment cycle.

Surprisingly, as already mentioned in the introductory part of this text, it has been possible according to the invention to obtain low-cost near-net shape ceramic composite material, particularly suitable for brake lining applications. The composites of the invention may be obtained in short manufacturing time (2 to 3 days), with low heat-treatments (1000-1300°C) and have friction behavior comparable to existing composites, more difficult and costly to prepare.

The claimed invention is now illustrated, in a non-limitative way, by the annexed figures and the following examples.

Figure 1 shows the comparison of the wear value (expressed in µm/face/run) recorded versus temperature (measured within the composite, at 2 mm from the surface) for a C/SiC-C composite of the invention (a "3D-product" prepared from a stack of 2D-fiber sheets obtained according to following example 1 : ―o―) and a commercial C/C composite (3D-product : ―+―).

Figure 2 shows the evolution of the friction coefficient versus the temperature (measured within the composite, at 2 mm from the surface) of the said C/SiC-C composite of the invention (―o―) and the said C/C composite (―+―).

The commercial C/C composite is obtained by Chemical Vapour Infiltration (CVI) of a 3D-preform. Such a process is much more expensive to carry out than the claimed production process which is carried out to produce the composite of the invention (see example 1). The commercial C/C composite is characterized by:
- a content of C fibers : 45 vol. %
- a density : 2.1 - 2.3 g/cm³
- a porosity : 10 -12 vol. %.

The results recorded in Figure 1 show that the claimed composite has:
- a lower wear (expressed in µm/face/run) up to a temperature of 150°C,
- a little bit higher wear between 150-220°C,
- nearly the same wear above 220°C.

Generally speaking, a lower wear is better from the user's point of view (it implies a longer life-time). Therefore the claimed composite is recommended for a low energy application (at low temperature).

The results recorded in Figure 2 show that:
- the friction coefficient of the tested composites is on the same level up to 180°C,
- above 180°C, the wear coefficient of the composite of the invention is lower.

The higher wear coefficient, the better braking properties of the system. It is generally considered that the said wear coefficient should be on the level of 0.45-0.6.

The said wear coefficient is expressed in the arbitrary unit.

The results given in Figure 1 are confirmed by those given in Figure 2. The claimed composite is better than the commercial one in the lower temperature range.

### Example 1 : C/SiC-C composite

Composites of the invention are prepared as follow.
- Bi-directional preforms of carbon fibers cut in the dimension (diameter 145 mm) are stacked and then impregnated by a deionized water based slurry, consisting of a mixture of 65 wt.% solids of which 90 wt.% was silicon carbide (SiC) powder, with 6.9 wt.% of Y₂O₃ and 3.1 wt.% of Al₂O₃. The impregnation is carried out at room temperature, at the atmospheric pressure, for 1 hour.
- The infiltrated preforms are consolidated by gas pressure infiltration (20 bar, 1h).
- The green bodies obtained are dried and heat-treated at 400°C during 1 hour in air to remove organic additives.
- The said green bodies are immersed in a bath of a phenolic resin (commercialised under the name of CEELLOBOND J2027L by Gladgen Chem. Ltd (UK)) for 5 days (at the atmospheric pressure, at room temperature), for full impregnation.
- The composites are then heat-treated at 120°C for 16 hours in air.
- The heat-treated composites are then successively pre-carbonized at 700°C for 2 hours under a flow of nitrogen, carbonized in argon for 1 hour at 1000°C.

Some properties of such composites are given in Table I below.

Such composites have been tested (see annexed Figures 1 and 2).

### Example 2 : C/SiC -C composite

Composites of the invention are prepared as indicated in example 1, except that the carbonization in argon is carried out for 1 hour at 1250°C.

Some properties of such composites are given in Table 1 below.

### Example 3 : C/SiC - SiCN composite

Composites of the invention are prepared as indicated in example 1, except that:
- an organometallic polymer resin of the polysilazane type (commercialised under the name CERASET® SN by Lanxide Polymer Product Company (USA)) is used instead of the phenolic resin. The impregnation is carried out at 80°C, for 1 to 2 hours ;
- the pyrolysis is carried out in argon for 1 hour at 1300°C;

Some properties of such composites are given in Table 1 below.

### Example 4 : C/Si₃N₄ -SiCN composite

Composites of the invention are prepared as indicated in example 1, except that:
- a Si₃N₄ powder is first used instead of a SiC powder;
- an organometallic polymer resin of the polysilazane type (CERASET® SN : see example 3) is used instead of the phenolic resin. The impregnation is carried out at 80°C, for 1 to 2 hours ;
- the pyrolysis is carried out under nitrogen for 1 hour at 1350°C. Some properties of such composites are given in Table 1 below.

The composites of the invention prepared according to the above examples 3 and 4 are obtained in a total manufacturing time not exceeding 20-24 hours.

**Table 1**

| Composite type | C/SiC-C | C/SiC-C | C/SiC-SiCN | C/Si₃N₄ -SiCN |
|---|---|---|---|---|
| Obtained according to example | 1 | 2 | 3 | 4 |
| Content of C fibers ( vol.%) | 29 | 29 | 29 | 44 |
| Temperature of carbonisation (°C) | 1000 | 1250 | 1300 | 1350 |
| Density (g/cm³) | 2.21 | 2.20 | 2.32 | 2.13 |
| Porosity (%) | 7.1 | 7.3 | 7.4 | 8.7 |

## Claims

1. A 2D-long fiber reinforced ceramic matrix composite wherein the said long fibers are selected from the group consisting of carbon fibers, non-oxide ceramic fibers and mixtures thereof and the said ceramic matrix is a biphasic ceramic-amorphous matrix.

2. The composite according to claim 1, wherein the said long fibers are carbon fibers.

3. The composite according to claim 1 or 2, wherein its fiber content is 20 to 60% by volume.

4. The composite according to any one of claims 1 to 3, wherein the ceramic phase component of the matrix consists of Cgraphite, of another non-oxide compound or of one of their mixtures.

5. The composite according to claim 4, wherein said other non-oxide compound is selected from the group consisting in SiC, Si₃N₄, SiAION and MoSi₂.

6. The composite according to any one of claims 1 to 5, wherein the amorphous phase component of the matrix is an amorphous carbon phase, an amorphous SiCN phase, an amorphous SiCNB phase or a mixture of such amorphous phases.

7. Manufactured articles, consisting at least in part of at least one composite according to any one of claims 1 to 6.

8. The manufactured articles according to claim 7, selected from the group consisting in brake lining, seals, components of chemical reactors, heat recover equipment, heat exchangers, heat pumps, Stirling engines.

9. A process for manufacturing 2D-long fiber reinforced ceramic matrix composites, comprising:
- impregnating a 2D-long fiber preform with a solvent dispersion of a ceramic powder, said fibers of the preform being selected from the group consisting of carbon fibers, non-oxide ceramic fibers and mixtures thereof,
- removing said solvent from the impregnated preform to obtain a green body,
- impregnating said green body with a precursor of an amorphous matrix,
- heat-treating said impregnated green body to generate the composite sought after or to generate a precursor of it which must undergo at least one further cycle of impregnation with a precursor of the amorphous matrix and heat-treatment.

10. The process according to claim 9, wherein said ceramic powder is selected from the group consisting of Cgraphite powder, of another non-oxide powder or a mixture of said powders.

11. The process according to claim 9 or 10, wherein the amount of said ceramic powder in said solvent dispersion is 20 to 85% weight, advantageously 50 to 70 % weight.

12. The process according to any one of claims 9 to 11, wherein the porosity of the matrix of the green body is between 20 and 50% volume.

13. The process according to any one of claims 9 to 12, wherein said precursor of an amorphous matrix is selected from the group consisting of organic polymer resins and mixtures thereof.

14. The process according to claim 13, wherein said organic polymer resins are selected from the group of phenolic resins, polysiloxanes and polysilazanes.

15. The process according to any one of claims 9 to 14, wherein said precursor of an amorphous matrix is used having a viscosity of between 0.5 and 5 P (5 and 50 cPa.s).

16. The process according to any one of claims 9 to 15, wherein the heat treatment of said impregnated green body comprises two steps.

17. The process according to claim 16, wherein the said heat treatment comprises:
- a first heating step to make the impregnated green body rigid,
- a shaping or machining of the rigid impregnated green body,
- a pyrolysis step of the said shaped or machined rigid impregnated green body; said pyrolysis step being carried out in a non-oxidizing atmosphere.
